# NEW EUROPEAN PATENT SPECIFICATION

(11) **EP 0 204 548 B2**
(45) Date of publication and mention of the opposition decision: **13.03.1996**
(45) Mention of the grant of the patent: 19.12.1990
(21) Application number: 86304228.9
(22) Date of filing: 03.06.1986
(51) Int. Cl.: C08F 212/04

(54) **Transparent heat-resistant styrene-base copolymer**
Durchscheinende hitzebeständige Copolymere auf Styrolbasis
Copolymère transparent résistant à la chaleur à base de styrène

(30) Priority: 03.06.1985 JP 118717/85
(43) Date of publication of application: 10.12.1986
(73) Proprietor: MITSUI TOATSU CHEMICALS, Inc., Chiyoda-Ku Tokyo 100 (JP)
(72) Inventor: Iwamote, Mune, Totsuka-ku, Yokohama-shi, Kanagawa-ken (JP); Ito, Norifumi, Damakura-shi Kanagawa-ken (JP); Matsubara, Tetsuyuki, Totsuka-ku, Yokohama-shi, Kanagawa-ken (JP); Ando, Toshihiko, Totsuka-ku, Yokohama-shi, Kanagawa-ken (JP)
(74) Representative: Griffin, Kenneth David

(56) References cited:
- GB-A- 1 088 758
- GB-A- 2 010 866
- JP-A-58 162 616
- JP-A-60 079 019
- US-A- 3 766 142
- US-A- 4 039 734
- R.F. Boyer et al., Styrene Polymers, Reprint of Encyclopedia of Polymer Science and Technology, Vol. 13, 1970, pp. 197, 395, 398
- Encyclopedia of Polymer Science and Technology, Vol. 13, 1970, pp. 177-181, 183-184
- ANSI/ASTM D-1925-70
- ANSI/ASTM D-1003-61
- B. Vollmert "Polymer Chemistry", Springer Verlag, 1973, pp. 410-411

## Description

This invention relates a novel transparent styrene-base copolymer having excellent heat resistance.

Polystyrene has conventionally been employed as a moldable and fabricable material having excellent transparency and mechanical strength. Its use at elevated temperatures however encounters problems since it is inferior in heat resistance. It has hence been desired to improve its heat resistance.

If improved heat resistance is the sole object, this can be achieved to a certain extent by copolymerizing maleic anhydride with styrene (see, for example, Japanese Patent Publication No. 40970/ 1983). Styrene-maleic anhydride copolymers however have insufficient stability upon their molding or fabrication. They thus involve a problem that they undergo decomposition, gelation and the like when their molding or fabrication temperatures become higher. There is hence an outstanding demand for further improvements.

U.S. Patent No. 3,766,142 discloses a copolymer composed of 25-90 mole% of acrylonitrile, 1-25 mole% of an N-arylmaleimide and the remainder of an ethylenically unsaturated monomer. Where the ethylenically unsaturated monomer is an aromatic olefin, the molar ratio of the aromatic olefin to acrylonitrile is disclosed to fall within a range of 0.5-4. The above U.S. patent discloses, in Example 33, that a terpolymer capable of providing a transparent plaque was obtained by subjecting acrylonitrile, styrene and N-o-chlorophenylmaleimide to emulsion polymerization.

Copolymers obtained in accordance with the above U.S. patent are however still insufficient in transparency.

U.S. Patent No. 3,676,404 discloses copolymers each of which is composed of 80-95 wt.% of methyl methacrylate unit, 5-20 wt.% of an N-arylmaleimide unit and 0-15 wt.% of a unit derived from any other ethylenically unsaturated copolymerizable compund (e.g., styrene unit or the like). These copolymers are described as having transparency and strength and as being suitable especially for the molding of various articles which are exposed to relatively high environment temperatures.

These copolymers are however still insufficient in transparency.

An object of this invention is to provide a novel styrene-base copolymer excellent in both transparency and heat resistance.

The present inventors have found that among styrene-base copolymers containing N-phenylmaleimide monomers, those having specific monomer compositions and Mw/Mn ratios, Mw being their weight average molecular weights and Mn their number average molecular weights, within a particular range are resins excellent in heat resistance, mechanical strength and transparency.

The present invention therefore provides a transparent heat-resistant styrene-base copolymer comprising (a) 30-80 parts by weight of a unit derived from a styrene-type monomer, (b) at least 5 parts by weight of a unit derived from a (meth)acrylonitrile monomer (as hereinafter defined) and/or a unit derived from a (meth)acrylic ester type monomer and (c) 2-25 parts by weight of a unit derived from a phenylmaleimide-type monomer, all based on 100 parts by weight of the copolymer, wherein:
(1) the weight ratio (b)/(c) is at least 0.3;
(2) the ratio of the weight average molecular weight Mw of the copolymer to the number average molecular weight Mn of the copolymer in the copolymer, Mw/Mn, is 1.8-3.0; and
(3) the copolymer does not contain more than 0.2 wt.% of the phenylmaleimide-type monomer, which copolymer is obtainable by the specific polymerisation process described hereinafter.

The term "styrene-type monomer" as used herein means styrene or its derivative. It may include, for example, styrene, α-methylstyrene, o-methylstyrene, m-methylstyrene, p-methylstyrene, ring-, α- or β-substituted bromostyrene, t-butylstyrene or chlorostyrene, with styrene or α-methylstyrene being particularly preferred. They may be used either singly or in combination.

By the term "(meth)acrylonitrile monomer" as used herein is meant acrylonitrile or methacrylonitrile. They may be used either singly or in combination.

The term "(meth)acrylic ester type monomer" as used herein means an alkyl acrylate or methacrylate. It may preferably mean a C₁₋₁₀ alkyl ester of acrylic or methacrylic acid such as methyl acrylate, ethyl acrylate, ethyl methacrylate or cyclohexyl methacrylate. Among these, methyl methacrylate, methyl acrylate or ethyl acrylate is preferred. They may be used either singly or in combination.

On the other hand, the term "phenylmaleimide-type monomer" as used herein means an N-phenyl maleimide substituted or unsubstituted phenyl group at the N-position thereof, such as N-phenylmaleimide, N-orthomethylphenylmaleimide, N-orthochlorophenylmaleimide or N-orthomethoxyphenylmaleimide, or a derivative thereof. Among these, N-phenylmaleimide, N-orthochlorophenylmaleimide and N-orthomethoxymaleimide are preferred. For reducing the yellowness of resins, ortho-substituted phenylmaleimides such as N-orthochlorophenylmaleimide and N-orthomethoxymaleimide are preferred. They may be used either singly or in combination.

The relative proportions of the units derived from the respective monomers, which make up the copolymer of this invention, are (a) 30-80, preferably 40-70 parts by weight of the unit derived from the styrene-type monomer, (b) at least 5, preferably at least 10, most preferably 15-40 parts by weight of the unit derived from the (meth)acrylonitrile monomer and/or the unit derived from the (meth)acrylic ester type monomer and (c) 2-25 parts by weight, preferably 10-20 parts by weight of the unit derived from the phenylmaleimide-type monomer, all based on 100 parts by weight of the copolymer.

If the unit derived from the styrene-type monomer is contained in any amount less than 30 parts by weight, the resulting copolymer has low heat resistance. Any amounts greater than 80 parts by weight lead to copolymers having poor mechanical strength. If the unit derived from the (meth)acrylonitrile monomer and/or the unit derived from the (meth)acrylic ester type monomer is used in any amount smaller than 5 parts by weight, the resulting copolymer has poor mechanical strength. Any amounts in excess of 70 parts by weight however result in reduced heat resistance. No particular limitation is imposed on the relative proportions of the unit derived from the (meth)acrylonitrile monomer and that derived from the (meth)acrylic ester type monomer. Their relative proportions may be suitably determined depending what end use will be made. Needless to say, either one of these units may be used singly without encountering any problems or inconvenience.

If the proportion of the unit derived from the phenylmaleimide-type monomer is lower than 2 parts by weight, the resulting copolymer has low heat resistance. However, any amounts greater than 25 parts by weight lead to reduced mechanical strength.

The weight ratio (b)/(c) is at least 0.3, preferably at least 0.7, most preferably at least 1.2. This ratio is important in assuring good mechanical strength to the resultant product. If the ratio (b)/(c) is smaller than 0.3, the resultant copolymer has low tensile strength and Izod impact strength. It therefore develops such problems as cracks by impact upon molding or fabrication of the copolymer or upon use of molded articles in actual applications.

The content of the unreacted phenylmaleimide still remaining in 100 parts by weight of the copolymerized resin composition of this invention must be 0.2 part by weight or lower. Any contents greater than 0.2 part by weight lead not only to reduced heat resistance but also to cumulative sticking of the phenylmaleimide-type monomer on the inner walls and vent of a mold, thereby causing stain on the surfaces of molded or fabricated articles or making it difficult to continue stable molding or fabrication. Besides, the occurrence of die line becomes remarkable in extrusion molding or fabrication. Namely, the remaining phenylmaleimide-type monomer gives extremely serious deleterious effects to molding or fabrication work than the styrene-type monomer, (meth)acrylonitrile monomer or (meth)acrylic ester type monomer which is routinely employed.

Incidentally, one or more monomer components other than the aforementioned monomers and copolymerizable with them may also be copolymerized in the copolymer of this invention provided that their contents are limited within such ranges as not impairing the properties of the copolymer of this invention.

In the copolymer of the present invention, the Mw/Mn ratio in which Mw means the weight average molecular weight and Mn denotes the number average molecular weight must be maintained within 1.8-3.0, preferably 2.0-2.7.

In the present invention, these molecular weights are determined by measuring them in accordance with gel permeation chromatography (hereinafter abbreviated as "GPC") in the same manner as in the measurement of moelcular weights of usual styrene homopolymers and then converting the measurement results based on the measurement result obtained with respect to the standard polystyrene. In the present invention, GPC is effected by using tetrahydrofuran as a solvent and each molecular weight is calculated by rounding off any values smaller than 1,000.

The ratio Mw/Mn within the above-described numeral range can generally be attained by choosing suitable conditions, for example, by optimizing the state of mixing of the individual monomers in a reaction vessel (e.g., the type of the reaction vessel to be employed, stirring conditions, positional relationship between the feeding inlets for the monomers and the outlet for the withdrawal of the polymerization mixture in the reaction vessel), using the continuous polymerization process, and minimizing the polymerization in the course of from the polymerization reactor to an equipment for the separation and removal of volatile components and the crosslinking and decomposition of the resultant copolymer in the equipment for the separation and removal of voltatile components.

If the Mw/Mn ratio exceeds 3.0, the resulting copolymer has poor transparency even if the composition of the copolymer satisfies the above-described requirement. On the other hand, it has been found, by an investigation conducted by the present inventors, to be difficult to control the Mw/Mn ratio smaller than 1.8 in usual industrial processes.

Copolymers of this invention have no particular problems for their actual applications so long as their monomer compositions and molecular weight ratios meet the corresponding requirements described above. It is however desirable from the viewpoint of mold smear and sticking of gum-like matter that less components are caused to dissolve in methanol upon dissolution of a copolymer in methyl ethyl ketone and subsequent reprecipitation of the copolymer in methanol, in other words, the copolymer contains less methanol-soluble components. It is especially desirable that the total content of methanol-soluble components is below 5wt.%.

As an exemplary preparation process of a styrene-base copolymer composed of monomers in the above-specified composition and having an Mw/Mn (Mw: weight average molecular weight; Mn: number average molecular weight) ratio with the above-specified range, the following process may be mentioned.

A monomer mixture composed, for example, of 15-90 parts by weight of a styrene-type monomer, 2-70 parts by weight of a (meth)acrylonitrile monomer and/or a (meth)acrylic ester type monomer, 1-20 parts by weight of a phenylmaleimide-type monomer and if necesary, 0-30 parts by weight of one or more monomers copolymerizable with the afore-mentioned monomers is fed to an apparatus in which a complete-mixing vessel-type reactor and an equipment for the separation and removal of volatile components are connected in series, whereby a styrene-base copolymer is prepared continuously. By effecting the polymerization in such a manner that the ratio of the content (y wt.% ) of the phenylmaleimide-type monomer copolymerized in the resultant copolymer to the proportion (x wt.%) in the monomer mixture fed for the polymerization reaction, i.e., the y/x ratio falls within a range of 0.9-4.0, preferably 1.3-2.0, the styrene-base copolymer of this invention can be prepared efficiently.

The complete-mixing vessel-type reactor employed in the above process is not necessarily limited to a reactor of any specific type. It is however desirable that the composition and temperature of the polymerization mixture are maintained substantially uniform at every point in the reaction vessel. Although no particular limitation is imposed on the number of vessel(s) of the complete-mixing vessel-type reactor, 1 or 2 is preferred with 1 being especially preferred.

As the equipment for the separation and removal of volatile components, an apparatus equipped with a preheater, vacuum vessel and discharge pump or a vented screw extruder may be mentioned as a typical example. An apparatus constructed of one preheater and one vacuum vessel is preferably employed as such an equipment for the separation and removal of volatile components. It is preferable to maintain the internal pressure at a low level in the inlet zone of the preheater, since use of a higher pressure tends to promote reactions at the inlet zone of the preheater and encounters difficulties in controlling the Mw/Mn ratio.

The significance of the above-specified y/x ratio will next be described. In general, the y/x ratio decreases as the conversion of the phenylmaleimide-type monomer into the copolymer is reduced and/or the overall conversion of the monomers, which are subjected to the polymerization reaction, into the copolymer is increased. It has however been discovered that if the y/x ratio is 0.9 or smaller, the resulting copolymer has an Mw/Mn ratio greater than 3.0 and its transparency is not sufficient, thereby failing to obtain a copolymer having outstanding transparency, even when the polymerization is conducted by using such a reactor as described above. A y/x ratio greater than 1.3 is preferable in obtaining a copolymer having a still smaller Mw/Mn ratio.

The y/x ratio becomes greater, for example, as the overall conversion of monomers, which have been fed for a polymerization reaction, is rendered smaller. It is thus possible to prepare a copolymer with an Mw/Mn ratio of 3.0 or smaller even when the y/x ratio is 4 or greater. It is however necessary to control the overall conversion at a level lower than 25% in this case. Under such conditions, the heat consumption in the step for the separation and removal of volatile components and the labor for the recovery of unreacted monomers become greater, thereby resulting in a greater energy loss and enlargement of equipment. Use of such a large y/x ratio is therefore not preferable. In some instances, the resulting polymer is liable to undergo abnormal and excessive heating locally due to an increased heat consumption in the removal step of volatile components. As a result, the resultant copolymer is locally colored in brown.

As an exemplary method for maintaining the y/x ratio at a larger level, it is preferable to conduct the polymerization, in addition to the above-described conditions, by optimizing the positional relationship between the raw material inlet and polymerization mixture outlet in the complete-mixing vessel-type reactor, namely, providing the inlet and outlet in positional relationship as remote as possible, minimizing the polymerization from the discharge through the outlet of the reactor until the completion of its treatment in the equipment for the separation and removal of volatile components, or adjusting the mixing time in the reactor in accordance with the feed rates of the raw material monomers. For example, the mixing time may preferably be shortened as the feed rates of the raw material monomers are increased.

The term "mixing time in the complete-mixing vessel" as used herein means the time Tm required until the difference between the concentration of a labelling material in a sampled polymerization mixture and its corresponding theoretical mixing concentration falls within 5%, when a solution of 0.1 Pa.s (1 poise) or so is introduced and agitated in a reactor, a solution of a specific amount of the labelling material (dye, solvent) dissolved in another solvent of a type different from the former solvent is instantaneously poured while maintaining the agitation, and the liquid in the reaction vessel is thereafter sampled out little by little periodically. In the preparation of usual polystyrene, the mixing between a fresh supply of the raw material and the reaction mixture in the complete-mixing reaction vessel can be satisfactorily performed so long as the average residence time θ of the reaction mixture in the vessel is 10 times the mixing time Tm or longer. In the preparation of the styrene-base copolymer of this invention, it is also preferable to set θ at a value 10 times or longer, or notably, 20 times or longer relative to Tm. In addition to controlling the mixing time under the above-mentioned conditions upon preparation of the styrene-base copolymer of this invention, it is also preferable to conduct its preparation by suitably combining the above-mentioned feeding method of the raw materials, the withdrawing method of the reaction mixture.

In the above-described polymerization process, the feed solution of the monomer mixture may be charged in portions or may be additionally supplied in the reactor. In some instances, the individual monomer components may be separately charged in the reactor. They may also be additionally supplied. Separately from the styrene-type monomer, a raw material solution may be prepared from the phenylmaleimide monomer, the meth(acrylonitrile monomer or (meth)acrylic ester type monomer and if necesary, a solvent. The raw material solution may then be fed from an independent reservoir separately from the styrene-type monomer. This is a preferable method.

Upon preparation of the styrene-base copolymer of this invention, a radical polymerization process making use of a radical polymerization initiator is employed preferably.

As the radical polymerization initiator employed here, a conventionally-known organic peroxide and azo compound may generally be mentioned. Its 10-hour half-life temperature is 70°C-120°C, preferably, 75°C-100°C. the polymerization temperature is 90°C-130°C.

Upon practice of the polymerization reaction, a conventional molecular weight modifier, a solvent may be added in the stage of the polymerization reaction and if necessary, a conventional plasticizer, a stabilizer to heat and light and a mold-release compound may also be added in desired stages.

The copolymers of this invention may be used either singly or as mixtures with other resins such as polycarbonates, ABS resin and AB resin.

The present invention will hereinafter be described specifically by the following Examples.

### Example 1

### (1) Preparation of copolymer:

Into a single complete-mixing vessel-type reactor, 105 parts of a mixture composed of 65 parts by weight of styrene, 5 parts by weight of N-phenylmaleimide, 30 parts of methyl methacrylate and 5 parts of ethyl benzene and 5 parts of ethylbenzene solution containing 0.03 part of tert-butyl peroxy-2-ethylhexanoate were continuously fed per hour by using separate feed pumps.

The reactor was internally equipped with drafted screw-type agitating blades and in the inlet zone for the feed raw materials, with a turbine impeller. The revolution speeds of both agitators were maintained at 150 rpm. Under these conditions, the mixing time was 3 minutes or shorter. The raw material inlets were provided in a lower part of the vessel, and the polymerization mixture was withdrawn from an upper part of the vessel. The withdrawal rate of the mixture was 110 parts by weight per hour, like the feed rate of the monomers. The average residence time in the reactor was set for 2 hours, while the reaction time was maintained at 115°C. The polymerization mixture, which had been withdrawn from the outlet of the vessel, was continuously introduced through a double-walled pipe with a jacket temperature of 110°C into an equipment for the separation and removal of volatile components, which was constructed of a preheater equipped with a pressure control valve at the inlet thereof and a vacuum vessel (a vessel for the removal of volatile components). The inlet of the preheater was maintained at a vacuum of 53.3-80 kPa (400-600 Torr), whereas the vacuum vessel was held at 1.3 kPa (10 Torr). The resultant copolymer was continuously withdrawn from a lower part of the vacuum vessel to obtain the copolymer as pellets. The monomers and ethylbenzene separated from the polymerization mixture were withdrawn from an upper part of the vacuum vessel. They were recovered in their entirety in a reservoir which was maintained at -5°C. The amount of the thus-recovered solution (recovered solution) was 65 parts by weight per hour.

The ratio of the weight average molecular weight Mw of the copolymer to its number average molecular weight Mn, namely, Mw/Mn, was measured on the basis of the method described above.

### (ii) Analysis of the composition of the copolymer:

The recovered solution was analysed by gas chromatography and liquid chromatography so as to determine the relative proportions of the recovered styrene, N-phenylmaleimide, methyl methacrylate and ethyl benzene. The content of the unreacted N-phenylmaleimide remaining uncopolymerized in the copolymer pellets was measured by dissolving the pellets in methyl ethyl ketone, reprecipitating the copolymer in methanol, removing the precipitate and then measuring the amount of N-phenylmaleimide contained in the methanol. Besides, the amount of the methanol-reprecipitated copolymer was also measured. Based on its difference from the amount of the pellets employed in the test, the amount of methanol-soluble components were determined. The amounts of methanol-soluble components per 100 parts by weight of the corresponding copolymers are shown in Table 1.

From the feed amounts of raw materials, the amount of the recovered solution and results of analysis on the composition of the recovered solution, the composition of the individual monomers in the copolymer was determined.

### (iii) Evaluation of physical properties of copolymer:

The resultant copolymer was injection-molded at a cylinder temperature of 230°C to determine its physical properties. The evaluation of its physical properties was conducted in accordance with the following methods:
- Heat resistance:: Vicat softening point by ASTM D-1525.
- Mechanical strength:: Izod impact strength and tensile strength in accordance with JIS K 6871.
- Transparency:: Haze by ASTM D-1925. Lower haze values are evaluated as higher transparency.
- Mould smear:: The degree of smear of a mould was observed after conducting injection moulding 600 shots. The evaluation was made in 4 ranks ranging from smear-free good results to heavily-smeared results in order. The results are shown by ⓞ, ○, Δ and X.
- Color tone:: Yellowness index by ASTM D-1925.

The reaction conditions, the analysis of the composition of the copolymer and the evaluation results of its physical properties are summarized in Table 1.

### Examples 2 and 3

The procedures of Example 1 were repeated except that the composition of the monomers fed in the reactor was changed as shown in Table 1. Test conditions and results are given in Table 1.

### Example 4

The procedures of Example 1 were repeated except that N-orthochlorophenylmaleimide was used as a phenylmaleimide-type monomer, the composition of the monomers fed in the reactor was changed as shown in Table 1 and the degree of vacuum in the vessel for the removal of volatile components was changed to 3.3 kPa (25 Torr). Test conditions and results are given in Table 1.

The resultant copolymer had a low yellowness index and was hence excellent.

### Example 5

The procedures of Example 1 were repeated except that styrene, acrylonitrile and N-phenylmaleimide were used as starting monomers in their corresponding proportions shown in Table 1, 0.13 part of t-dodecylmercaptan was additionally incorporated, the reaction temperature was set at 120°C, the average residence time was controlled for 1 hour and the degree of vacuum in the vessel for the removal of volatile components was changed to 2.7 kPa (20 Torr). Test conditions and results are given in Table 1.

### Example 6

The procedures of Example 1 were repeated except that the composition of the monomers fed in the reactor was changed as shown in Table 1. Test conditions and results are given in Table 1.

### Comparative Example 1

A copolymer outside the scope of the present invention was prepared in the same manner as in Example 1 except that the composition of the monomers fed in the reactor was changed as shown in Table 1. Test conditions and results are given in Table 1.

The Izod impact strength and tensile strength were lower compared with the copolymer obtained in Example 1.

### Comparative Example 2

In a vessel-type reactor provided with stirrer, 30 parts by weight of ethylbenzene, 65 parts by weight of styrene and 20 parts by weight of methyl methacrylate were charged. After heating the contents to 100°C with stirring, a solution of 0.13 parts by weight of 1,1.bis(tert-butylperoxy)-3,5,5-trimethylcylohexane dissolved in 5 parts by weight of ethylbenzene was poured at once in the reactor. Thereafter, while continuously feeding a liquid mixture of 15 parts by weight of ethylbenzene, 10 parts by weight of methyl methacrylate and 5 parts by weight of phenylmaleimide to the reactor, they were polymerized at 100°C for 3 hours, followed by further polymerization at 110°C for 2 hours. The reaction mixture was withdrawn from the reactor and maintained under vacuum 1.3-0.7 kPa (10-5 Torr) in an oven of 210°C, thereby removing volatile components. Test conditions and results are shown in Table 1.

The Mw/Mn ratio of the resultant copolymer was 3.4, which was outside the corresponding range defined in the present invention. The copolymer had low transparency.

The mould smear test was not conducted.

### Comparative Example 3

The procedures of Example 1 were repeated except that the degree of vacuum in the vessel for the removal of volatile components was changed to 10.7 kPa (80 Torr). Test conditions and results are given in Table 1.

The content of the remaining phenylmaleimide was high, and the mould smear was severe.

### Comparative Example 4

The procedures of Example 1 were repeated except that the composition of the monomers fed in the reactor was changed as shown in Table 1. Test conditions and results are given in Table 1.

The resultant copolymer contained the methyl methacrylate unit in a high proportion and had a low heat-resistant temperature.

### Comparative Example 5

The procedures of Example 1 were repeated except that the composition of the monomers fed in the reactor was changed as shown in Table 1, the reaction temperature was set at 120°C and the average residence time was set for 1 hour. Test conditions and results are given in Table 1.

The resultant copolymer contained the phenylmaleimide-type monomer in a high proportion, and its tensile strength and Izod impact strength were both low.

### Comparative Example 6

The procedures of Example 1 were repeated except that the composition of the monomers fed in the reactor was changed as shown in Table 1, the supply of tert-butyl peroxy-2-ethylhexanoate was omitted, the reaction temperature was set at 130°C and the average residence time was set for 4 hour. Test conditions and results are given in Table 1.

The resultant copolymer contained neither acrylonitrile monomer nor acrylic ester type monomer and showed low tensile strength.

### Comparative Example 7

An emulsion polymerization was initiated by dispersing 20 parts by weight of acrylonitrile, 64 parts by weight of styrene, 10 parts of N-o-chlorophenylmaleimide, 5 parts of sodium laurylsulfate and 0.25 part by weight of tert-dodecyl mercaptain in water. The same amounts of the same monomers were added over ½ hour to the reaction mixture. The reaction was terminated at a conversion of about 70%. After removal of water and remaining monomers, the properties of the resultant monomer were evaluated. Its transparency was at a very low level and its haze was 11%. Its Mw/Mn was 3.8.

The values of Izod impact strength (IIS) and tensile strength (TS) were obtained by conversion. The measured values were (columns 1-6):

| | | | | | | | |
|---|---|---|---|---|---|---|---|
| IIS: | 2.4 | 2.5 | 2.3 | 2.3 | 2.1 | 2.3 | in kg.cm/cm |
| TS: | 510 | 540 | 480 | 500 | 530 | 535 | in kg/cm |

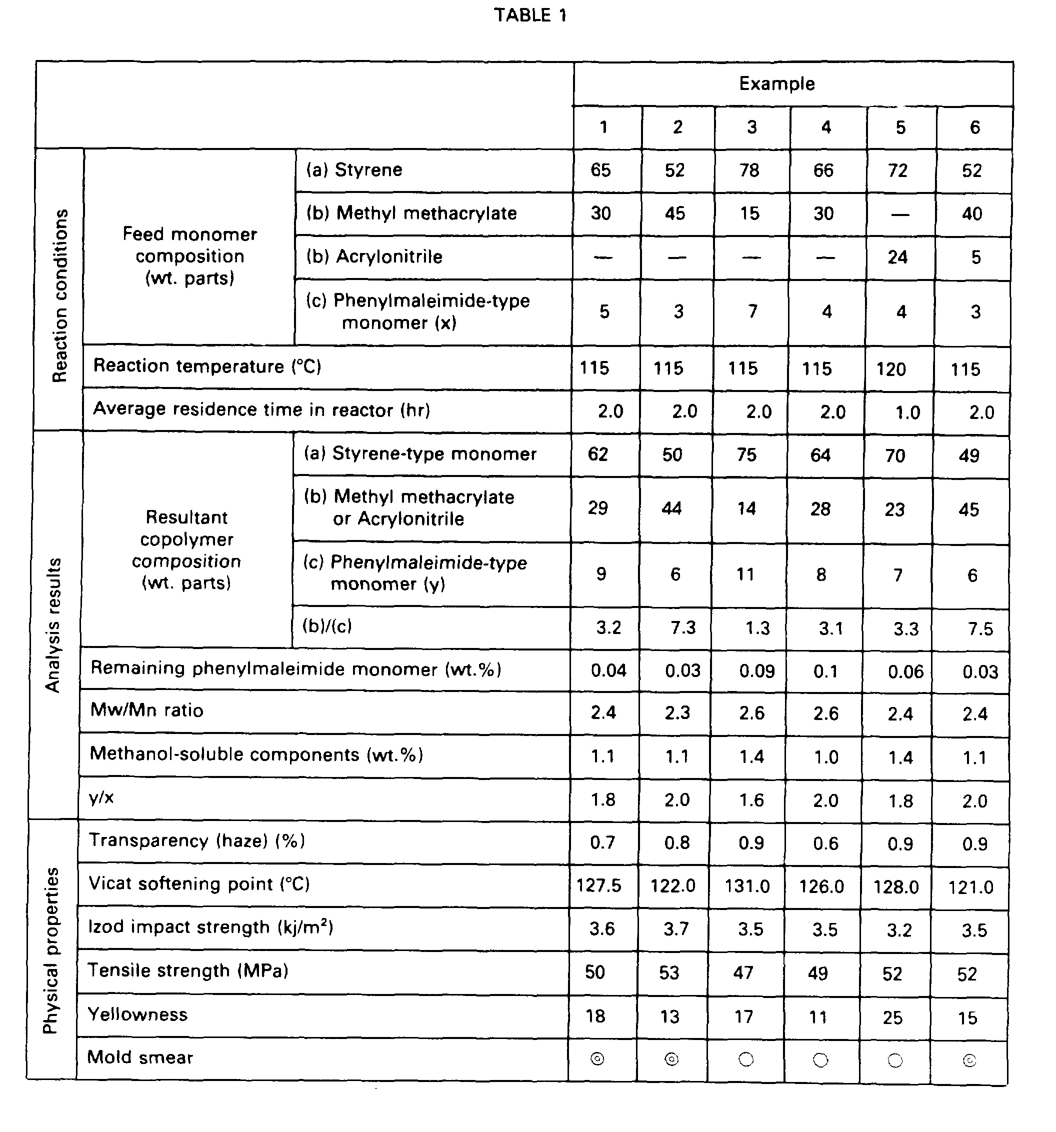

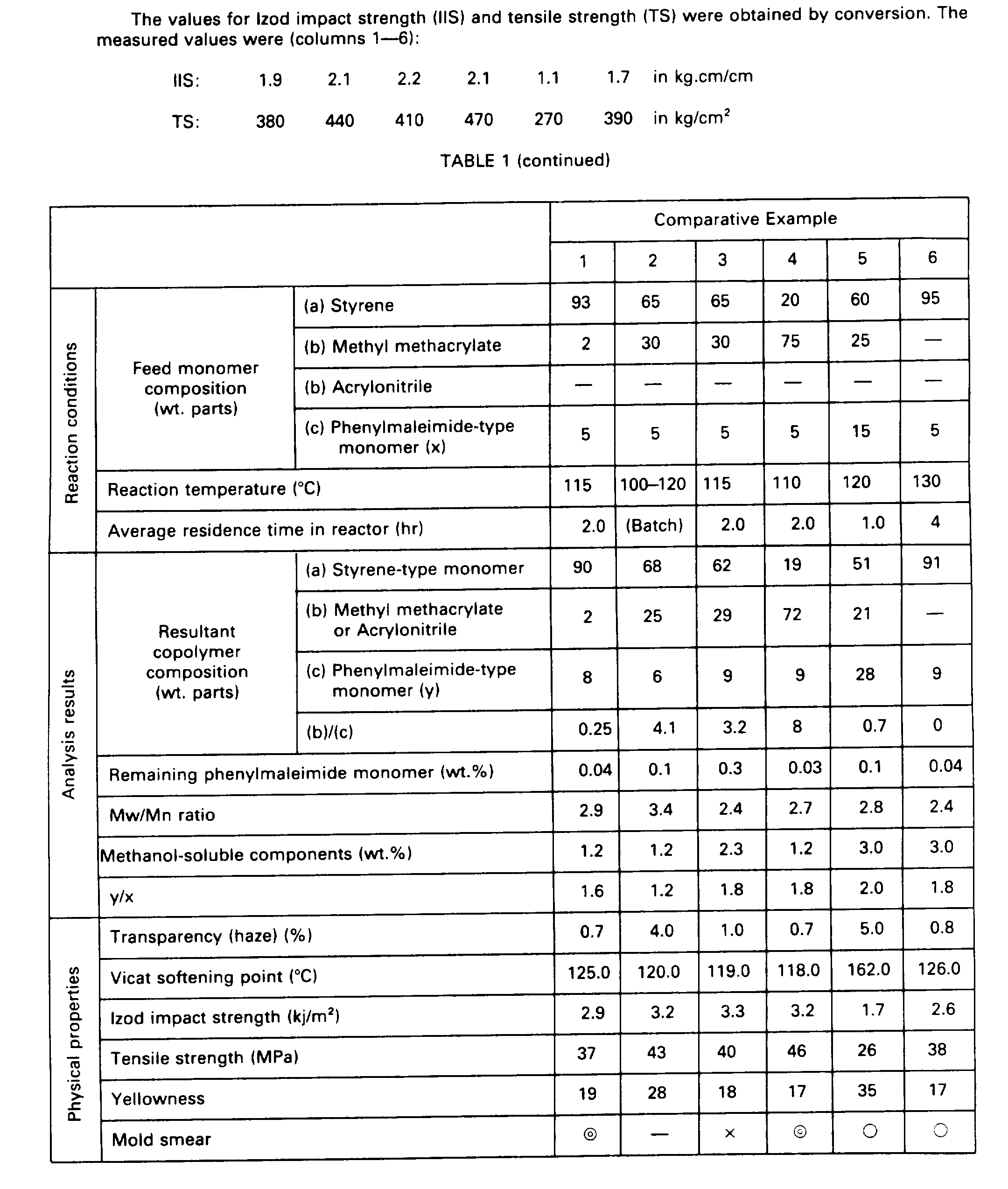

As is understood from Table 1, the copolymers of this invention have extremely high heat resistance, transparency and mechanical strength, and hence have great industrial values for their utility as transparent and heat-resistant molding materials.

## Claims

1. A transparent heat-resistant styrene-base copolymer comprising (a) 30-80 parts by weight of a unit derived from a styrene-type monomer, i.e. styrene Or its derivative, (b) at least 5 parts by weight of a unit derived from a (meth)acrylonitrile monomer, i.e. acrylonitrile or methacrylonitrile and/or a unit derived from a (meth)acrylic ester type monomer, i.e. an alkyl acrylate or methacrylate and (c) 2-25 parts by weight of a unit derived from a phenylmaleimide-type monomer, i.e. an N-phenyl maleimide substituted by a substituted or unsubstituted phenyl group at the N-position thereof, all based on 100 parts by weight of the copolymer, wherein:
(1) the weight ratio (b)/(c) is least 0.3;
(2) the ratio of the weight average molecular weight Mw of the copolymer to the number average molecular weight Mn of the copolymer in the copolymer, Mw/Mn is 1.8-3.0; and
(3) the copolymer does not contain more than 0.2 wt.% of the phenylmaleimide-type monomer, said copolymer being obtainable by continuous polymerization of a monomer mixture, which is composed of 15-90 parts by weight of styrene-type monomer, 2-70 parts by weight of an acrylonitrile-type monomer and/or an acrylic ester type monomer, 1-20 parts by weight of a phenylmaleimide-type monomer and 0-30 parts by weight of a further monomer copolymerizable therewith, at a temperature of 90-130 °C in the presence of a radical polymerization initiator while maintaining the monomer mixture in a completely mixed state until a y/x ratio of 0.9-4.0 is achieved and then removing volatile components from the resulting reaction mixture, *y* being the wt.% amount of the phenylmaleimide-type monomer copolymerized in the copolymer and *x* being the wt.% amount of the phenylmaleimide-type monomer in the monomer mixture.

2. A copolymer as claimed in Claim 1, wherein the copolymer contains methanol-soluble matter in an amount not more than 5 wt.%.

3. A copolymer as claimed in Claim 1, wherein the copolymer comprises (a) 40-70 parts by weight of the unit derived from the styrene-type monomer, (b) at least 10 parts by weight of the unit derived from the (meth)acrylonitrile monomer and/or the unit derived from the (meth)acrylic ester type monomer and (c) 10-20 parts by weight of the unit derived from the phenylmaleimide-type monomer, all based on 100 parts by weight of the copolymer.

4. A copolymer as claimed in Claim 3, wherein the copolymer comprises 15-40 parts by weight of the unit derived from the (meth)acrylonitrile monomer and/or the unit derived from the (meth)acrylic ester type monomer.

5. A copolymer as claimed in Claim 1, wherein the styrene-type monomer is styrene, α-methylstyrene, o-methylstyrene, m-methylstyrene, p-methylstyrene, ring-, α- or β-substituted bromostyrene, t-butylstyrene or chlorostyrene.

6. A copolymer as claimed in Claim 5, wherein the styrene-type monomer is styrene or α-methylstyrene.

7. A copolymer as claimed in Claim 1, wherein the (meth)acrylic ester type monomer is a C₁₋₁₀ alkyl ester of acrylic acid or methacrylic acid.

8. A copolymer as claimed in Claim 7, wherein the (meth)acrylic ester type monomer is methyl acrylate, ethyl acrylate or methyl methacrylate.

9. A copolymer as claimed in Claim 1, wherein the phenylmaleimide-type monomer is an N-phenylmaleimide substituted by a substituted or unsubstituted phenyl group at the N-position.

10. A copolymer as claimed in Claim 9, wherein the phenylmaleimide-type monomer is N-o-chlorophenylmaleimide or N-o-methoxyphenylmaleimide.

11. A process for the preparation of a copolymer as claimed in Claim 1, which comprises continuously polymerizing a monomer mixture, which is composed of 15-90 parts by weight of styrene-type monomer, 2-70 parts by weight of an acrylonitrile-type monomer and/or an acrylic ester type monomer, 1-20 parts by weight of a phenylmaleimide-type monomer and 0-30 parts by weight of a further monomer copolymerizable therewith, at a temperature of 90-130°C in the presence of a radical polymerization initiator while maintaining the monomer mixture in a completely mixed state until a y/x ratio of 0.9-4.0 is achieved and then removing volatile components from the resulting reaction mixture, *y* being the wt.% amount of the phenylmaleimide-type monomer copolymerized in the copolymer and *x* being the wt.% amount of the phenylmaleimide-type monomer in the monomer mixture.

12. A process as claimed in Claim 11, wherein the polymerization initiator has a 10-hours half-life temperature of 70°-120°C.

13. A process as claimed in Claim 11, wherein the ratio y/x is 1.3-2.0.

## Patentansprüche

1. Transparentes wärmebeständiges Kopolymer auf Styrol-Basis, das aus (a) 30 - 80 Masseteilen einer von einem Monomer des Styrol-Typs abgeleiteten Einheit, z.B. Styrol oder seinen Derivaten, (b) mindestens 5 Masseteilen einer von einem (Meth)Akrylonitril-Monomer abgeleiteten Einheit, z.B. Akrylonitril oder Methakrylonitril und/oder einer von einem Monomer der Gattung (Meth)Akrylsäureester abgeleiteten Einheit, z.B. ein Alkylakrylat oder Methylakrylat, und (c) 2 bis 25 Masseteilen einer von einem Monomer der Gattung Phenylmaleimid abgeleiteten Einheit, z.B. ein N-Phenylmaleimid, das durch eine substituierte oder nichtsubstituierte Phenyl-Gruppe an der N-Position substituiert ist, besteht, wobei alle Angaben auf 100 Masseteile des Kopolymers bezogen sind, bei dem
(1) das Gewichtsverhältnis (b)/(c) mindestens 0,3 ist;
(2) das Verhältnis des gewichtsgemittelten Molekulargewichtes Mw des Kopolymers zum Anzahl-gemittelten Molekulargewicht Mn des Kopolymers im Kopolymer, Mw/Mn, zwischen 1,8 und 3,0 beträgt; und
(3) das Kopolymer nicht mehr als 0,2 Gewichtsprozent des Monomers der Gattung Phenylmaleimid enthält,
wobei das Kopolymer durch kontinuierliche Polymerisation aus einer Monomermischung, die aus 15 bis 90 Masseteilen des Monomers des Styrol-Typs, 2 bis 70 Masseteilen eines Monomers der Akrylonitril-Gattung und/oder eines Monomers der Akrylsäureester-Gattung, 1 bis 20 Masseteilen eines Monomers der Phenylmaleimid-Gattung und 0 bis 30 Masseteilen eines weiteren Monomers, das mit den übrigen kopolymerisierbar ist, besteht, bei einer Temperatur von 90 bis 130 Grad Celsius im Beisein eines Radikalpolymerisierungs-Initiators erzeugbar ist, während die Monomer-Mischung solange in einem vollständig durchmischten Zustand gehalten wird, bis ein y/x-Verhältnis von 0,9 bis 4,0 erreicht wird, und anschließend flüchtige Komponenten aus der resultierenden Reaktionsmischung entfernt werden, wobei mit y der Gewichts-Prozentbetrag des im Kopolymer kopolymerisierten Monomers der Phenylmaleimid-Gattung und mit x der Gewichts-Prozentbetrag des Monomers der Phenylmaleimid-Gattung in der Monomer-Mischung bezeichnet ist.

2. Kopolymer nach Anspruch 1, bei dem das Kopolymer einen Methanol-löslichen Stoff in einem Anteil von nicht mehr als 5 Gewichtsprozent enthält.

3. Kopolymer nach Anspruch 1, bei dem das Kopolymer (a) 40 bis 70 Masseteile der vom Monomer des Styrol-Typs abgeleiteten Einheit, (b) mindestens 10 Masseteile der von dem Monomer der (Meth)Akrylonitril-Gattung abgeleiteten Einheit und/oder der vom Monomer der (Meth)Akrylsäureester-Gattung abgeleiteten Einheit und (c) 10 bis 20 Masseteile der vom Monomer der Phenylmaleimid-Gattung abgeleiteten Einheit enthält, wobei alle Angaben auf 100 Masseteile des Kopolymers bezogen sind.

4. Kopolymer nach Anspruch 3, bei dem das Kopolymer 15 bis 40 Masseteile der vom Monomer der (Meth)Akrylonitril-Gattung abgeleiteten Einheit und/oder der vom Monomer der (Meth)Akrylsäureester-Gattung abgeleiteten Einheit enthält.

5. Kopolymer nach Anspruch 1, bei dem das Styrol-Typ Monomer Styrol, α-Methylstyrol, o-Methylstyrol, m-Methylstyrol, p-Methylstyrol, Ring-, α- oder β-substituiertes Bromostyrol, t-Butylstyrol oder Chlorostyrol ist.

6. Kopolymer nach Anspruch 5, bei dem das Monomer des Styrol-Typs Styrol oder α-Methylstyrol ist.

7. Kopolymer nach Anspruch 1, bei dem das Monomer der (Meth)Akrylsäureester-Gattung ein C₁₋₁₀ Alkylester der Akrylsäure oder Methakrylsäure ist.

8. Kopolymer nach Anspruch 7, bei dem das Monomer der (Meth)Akrylsäureester-Gattung Methylakrylat, Äthylakrylat oder Methyl-Methakrylat ist.

9. Kopolymer nach Anspruch 1, bei dem das Monomer der Phenylmaleimid-Gattung ein N-Phenylmaleimid ist, das vom einer substituierten oder nicht-substituierten Phenyl-Gruppe an der N-Position substituiert ist.

10. Kopolymer nach Anspruch 9, bei dem das Monomer der Phenylmaleimid-Gattung ein N-o-Chlorophenylmaleimid oder ein N-o-Methoxyphenylmaleimid ist.

11. Verfahren zur Herstellung eines Kopolymers nach Anspruch 1, das das kontinuierliche Polymerisieren einer Monomer-Mischung, die aus 15 bis 90 Masseteilen des Monomers des Styrol-Typs, 2 bis 70 Masseteilen eines Monomers der Akrylonitril-Gattung und/oder eines Monomers der Akrylsäureester-Gattung, 1 bis 20 Masseteilen eines Monomers der Phenylmaleimid-Gattung und 0 bis 30 Masseteilen eines weiteren Monomers, das mit den übrigen kopolymerisierbar ist, besteht, bei einer Temperatur von 90 bis 130 Grad Celsius im Beisein eines Radikalpolymerisierungs-Initiators umfaßt, während die Monomer-Mischung solange in einem vollständig durchmischten Zustand gehalten wird, bis ein y/x-Verhältnis von 0,9 bis 4,0 erreicht wird, und anschließend flüchtige Komponenten aus der resultierenden Reaktionsmischung entfernt werden, wobei mit y der Gewichts-Prozentbetrag des im Kopolymer kopolymerisierten Monomers der Phenylmaleimid-Gattung und mit x der Gewichts-Prozentbetrag des Monomers der Phenylmaleimid-Gattung in der Monomer-Mischung bezeichnet ist.

12. Verfahren nach Anspruch 11, bei dem der Polymerisationsinitiator eine 10-Stunden Halbwertszeittemperatur von 70 bis 120 °C aufweist.

13. Verfahren nach Anspruch 11, bei dem das y/x-Verhältnis 1,3 bis 2,0 beträgt.

## Revendications

1. Copolymère transparent, résistant à la chaleur, à base de styrène, comprenant (a) 30 à 80 parties en poids d'une unité dérivée d'un monomère de type styrène, c'est-à-dire le styrène ou son dérivé, (b) au moins 5 parties en poids d'une unité dérivée d'un monomère (méth)acrylonitrile, c'est-à-dire l'acrylonitrile ou le méthacrylonitrile et/ou d'une unité dérivée d'un monomère de type ester (méth)acrylique, c'est-à-dire un acrylate alkylé ou un méthacrylate alkylé et (c) 2 à 25 parties en poids d'une unité dérivée d'un monomère de type phénylmaléimide, c'est-à-dire un N-phénylmaléimide substitué en position N par un groupe phényle substitué ou insubstitué, toutes basées sur 100 parties en poids du copolymère, dans lequel :
(1) le rapport en poids (b)/(c) est au moins de 0,3,
(2) le rapport de la masse moléculaire moyenne en poids Mw du copolymère à la masse moléculaire moyenne en nombre Mn du copolymère dans le copolymère, Mw/Mn, est 1,8 à 3, et
(3) le copolymère ne contient pas plus de 0,2% en poids du monomère du type phénylmaléimide,
ce copolymère pouvant être obtenu par une polymérisation continue d'un mélange de monomères qui est composé de 15 à 90 parties en poids d'un monomère du type styrène, de 2 à 70 parties en poids d'un monomère du type acrylonitrile et/ou d'un monomère du type ester acrylique, de 1 à 20 parties en poids d'un monomère du type phénylmaléimide et de 0 à 30 parties en poids d'un monomère supplémentaire copolymérisable avec eux, à une température de 90 à 130°C en présence d'un radical initiateur de polymérisation pendant le maintien du mélange de monomères à l'état mélangé totalement jusqu'à l'obtention d'un rapport y/x de 0,9 à 4 et l'élimination ensuite des composants volatils du mélange réactionnel résultant, y étant la quantité pondérale en pourcentage du monomère du type phénylmaléimide copolymérisé dans le copolymère et x étant la quantité pondérale en pourcentage du monomère du type phénylmaléimide dans le mélange de monomères.

2. Copolymère selon la revendication 1 dans lequel le copolymère contient une matière soluble dans le méthanol en quantité qui n'est pas supérieure à 5% en poids.

3. Copolymère selon la revendication 1 dans lequel le copolymère comprend (a) 40 à 70 parties en poids de l'unité dérivée du monomère du type styrène, (b) au moins 10 parties en poids de l'unité dérivée du monomère (méth)acrylonitrile et/ou de l'unité dérivée du monomère du type ester (méth)acrylique, et (c) 10 à 20 parties en poids de l'unité dérivée du monomère du type phénylmaléimide, toutes basées sur 100 parties en poids du copolymère.

4. Copolymère selon la revendication 3 dans lequel ce copolymère comprend 15 à 40 parties en poids de l'unité dérivée du monomère (méth)acrylonitrile et/ou de l'unité dérivée du monomère du type ester (méth)acrylique.

5. Copolymère selon la revendication 1 dans lequel le monomère de type styrène est : styrène,α-méthylstyrène, o-méthylstyrène, m-méthylstyrène, p-méthylstyrène, anneaux de bromostyrène, bromostyrène substitué en position α ou β, t-butyl- styrène ou chlorostyrène.

6. Copolymère selon la revendication 5 dans lequel le monomère de type styrène est le styrène ou le α -méthylstyrène.

7. Copolymère selon la revendication 1 dans lequel le monomère du type ester (méth)acrylique est l'ester alkylé C₁₋₁₀ de l'acide acrylique ou de l'acide méthacrylique.

8. Copolymère selon la revendication 7 dans lequel le monomère du type ester (mét)acrylique est l'acrylate de méthyle, l'acrylate d'éthyle ou le méthacrylate de méthyle.

9. Copolymère selon la revendication 1 dans lequel le monomère du type phénylmaléimide est un N-phénylmaléimide substitué en position N par un groupe phényle substitué ou insubstitué.

10. Copolymère selon la revendication 9 dans lequel le monomère du type phénylmaléimide est N-o-chlorophénylmaléimide ou N-o-métoxyphénylmaléimide.

11. Procédé pour la préparation d'un copolymère selon la revendication 1 qui comprend la polymérisation continue d'un mélange de monomères qui est composé de 15 à 90 parties en poids d'un monomère du type styrène, de 2 à 70 parties en poids d'un monomère du type acrylonitrile et/ou d'un monomère du type ester acrylique, de 1 à 20 parties en poids d'un monomère du type phénylmaléimide et de 0 à 30 parties en poids d'un monomère supplémentaire copolymérisable avec eux, à une température de 90 à 130°C en présence d'un radical initiateur de polymérisation pendant le maintien du mélange de monomères à un état complètement mélangé jusqu'à ce qu'un rapport y/x de 0,9-4 soit atteint et l'élimination ensuite des composants volatils du mélange réactionnel résultant, Y étant la quantité pondérale en pourcentage du monomère du type phénylmaléimide copolymérisé dans le copolymère et x étant la quantité pondérale en pourcentage du monomère du type phénylmaléimide dans le mélange de monomères.

12. Procédé selon la revendication 11 selon lequel l'initiateur de polymérisation a une température d'une demi-vie de 10 heures de 70 à 120°C.

13. Procédé selon la revendication 11 selon lequel le rapport y/x est 1,3-2.
